# EUROPÄISCHE PATENTSCHRIFT

(11) **EP 2 132 058 B1**
(45) Veröffentlichungstag und Bekanntmachung des Hinweises auf die Patenterteilung: **08.08.2012**
(21) Anmeldenummer: 08715979.4
(22) Anmeldetag: 22.02.2008
(51) Int. Cl.: B60N 2/30, B60N 2/36

(54) **FAHRZEUGSITZ**
VEHICLE SEAT
SIÈGE DE VÉHICULE

(30) Priorität: 06.03.2007 DE 102007011296; 29.06.2007 DE 102007030428
(43) Veröffentlichungstag der Anmeldung: 16.12.2009
(73) Patentinhaber: Johnson Controls GmbH, 51399 Burscheid (DE)
(72) Erfinder: FROTZ, Thomas, 51399 Burscheid (DE)
(74) Vertreter: Wolff, Felix
(86) Internationale Anmeldenummer: PCT/EP2008/001428
(87) Internationale Veröffentlichungsnummer: WO 2008/107083

(56) Entgegenhaltungen:
- DE-A1- 10 158 876
- DE-A1-102005 028 351
- DE-A1-102006 036 121

## Beschreibung

Die Erfindung betrifft einen Fahrzeugsitz, Insbesondere einen Rücksitz oder eine Rücksitzbank für ein Kraftfahrzeug, mit einer Rückenlehne und einem Sitzteil, wobei die Rückenlehne von einer Gebrauchsstellung in eine Staustellung überführbar ist und sich dabei zumindest die Form der Rückenlehne ändert.

Derartige Fahrzeugsitz sind aus dem Stand der Technik, beispielsweise der US 6,199,951, US 6,123,380, DE 103 51 157 B3, WO 20041043730 A2, WO 2004/043207 A2 und der DE-A-10 2005 028351 bekannt, die die Merkmale des Oberbegriffs von Patentanspruch1 lehrt. Die dort beschriebenen Fahrzeugsitze sind jedoch entweder vergleichsweise kompliziert aufgebaut oder bieten keinen hinreichenden Komfort.

Es war deshalb die Aufgabe der vorliegenden Erfindung einen Fahrzeugsitz zur Verfügung zu stellen, der die Nachteile des Standes der Technik nicht aufweist.

Gelöst wird die Aufgabe mit einem Fahrzeugsitz, gemäß patentanspruch1.

Der erfindungsgemäße Fahrzeugsitz bietet den Sitzinsassen in Gebrauchsstellung einen guten Komfort. Beim Vorklappen der Rückenlehne auf das Sitzteil läst er sich zu einem flachen Paket falten. Der erfindungsgemäße Fahrzeugsitz ist einfach und kostengünstig herstellbar.

Ein Fahrzeugsitz im Sinne der Erfindung ist jeder Fahrzeugsitz an einer beliebigen Stelle innerhalb des Fahrzeuges. Auf dem Fahrzeugsitz können eine eine oder mehrere Personen Platz finden, so dass es sich auch um eine Bank handeln kann, die auch eine geteilte Rückenlehne aufweisen kann. Vorzugsweise handelt es sich bei dem Fahrzeugsitz um einen Rücksitz.

Erfindungsgemäß weist der Fahrzeugsitz eine Rückenlehne und einen Sitzteil auf, wobei die Rückenlehne von einer Gebrauchsstellung in eine Staustellung überführbar ist und sich dabei die Form der Rückenlehne und/oder des Sitzteils. In der Staustellung ist die Rückenlehne und/oder der Sitzteil flach, so dass sich der Fahrzeugsitz zu einem flachen Paket zusammenfalten lässt. In der Gebrauchsstellung hingegen weisen der Sitztell und/oder die Rückenlehne eine gewölbte form auf, die vorzugsweise dem Körper des Sitzinsassen angepasst ist und dessen Sitzkomfort erhöht.

Dazu weist der Fahrzeugsitz in der Rückenlehne und/oder im Sitzteil eine Vielzahl von Mitteln auf, die sich im wesentlichen über die gesamte Länge des Sitzteils oder der Rückenlehne erstrecken. Die Mittel sind dabei nebeneinander über die Breite der Rückenlehne bzw. des Sitzteils angeordnet. Ihre Länge ist so gewählt, dass sie sich im wesentlichen über die gesamte Länge der Rückenlehne bzw. über die gesamte Länge des Sitzteils erstrecken. Erfindungsgemäß ändert sich ihre Form beim Überführen der Rückenlehne von der Gebrauchs- in die Staustellung reversibel; d.h. sie werden nur elastisch und nicht plastisch verformt.

Erfindungsgemäß sind diese Mittel Streifen aus einem halbsteifen Material. Halbstelf im Sinne der Erfindung bedeutet, dass die Streifen mit durchschnittlichen menschlichen Kräften gebogen werden können. Die Streifen können aus Kunststoff, Metall oder Holz oder einer Kombination aus diesen Werkstoffen gefertigt sein, wobei ein Werkstoff, der beim Zerbrechen nicht splittert, bevorzugt ist.

Von diesen Streifen sind eine Vielzahl nebeneinander angeordnet, wobei deren Breite und Anzahl so bemessen ist, dass im wesentlichen die gesamte Breite der Rückenlehne bzw. des Sitztells mit Streifen überdeckt ist. Die Streifen sind im wesentlichen parallel zueinander angeordnet. Je höher die Anzahl der Streifen desto höher der Komfort. Vorzugsweise sind die Streifen so an dem erfindungsgemäßen Fahrzeugsitz und/oder dessen Bezug gelagert, dass deren Wölbung individuell einstellbar ist. Durch diese erfindungsgemäße Ausführungsform wird insbesondere der Sitzkomfort erhöht.

Vorzugsweise weist der Fahrzeugsitz eine Achse aufweist, um die die Rückenlehne drehbar angeordnet ist und zu der die Mittel senkrecht angeordnet sind. Diese Achse ist in der Regel quer zur Fahrrichtung des Fahrzeuges ausgerichtet. Die Mittel, der Form sich beim Überführen der Rückenlehne von der Gebrauchs- in die Staustellung verändern, sind vorzugsweise senkrecht und entlang dieser Achse nebeneinander angeordnet.

In der Regel weist der Fahrzeugsitz einen Bezug. Vorzugsweise sind die halbsteifen Streifen besonders bevorzugt jeweils in einer Tasche des Sitzbezuges angeordnet. Dadurch ist ihre Lage innerhalb des Fahrzeugsitzes festgelegt. Besonders bevorzugt sind die Streifen zumindest teilweise verschieblich innerhalb der Taschen gelagert.

Vorzugsweise sind die Streifen mit ihrem in Richtung der Drehachse der Rückenlehne weisenden Ende fest mit dem Fahrzeugsitz verbunden. Besonders bevorzugt sind die Streifen mit ihrem von der Drehachse der Rückenlehne wegweisenden Ende beweglich mit dem Fahrzeugsitz verbunden.

In einer weiteren bevorzugten Ausführungsform weist der Fahrzeugsitz Mittel, vorzugsweise Bänder, besonders bevorzugt Stahlbänder auf, die verschieblich an der Rückenlehne angeordnet, vorzugsweise in diese eingelassen, sind. Beim Überführen der Rückenlehne von der Stau in die Gebrauchsstellung und umgekehrt, verschieben sich diese Bänder und bewirken die Formänderung der Rückenlehne und/oder des Sitzteils.

Die Bänder können aus Kunststoff, Metall oder Holz oder einer Kombination aus diesen Werkstoffen gefertigt sein, wobei ein Werkstoff, der beim Zerbrechen nicht splittert, bevorzugt ist. Vorzugsweise sind die Bänder jedoch aus Stahl.

Vorzugsweise sind die Bänder im wesentlichen deckungsgleich zu den Streifen angeordnet. Besonders bevorzugt befinden sich die Bänder unterhalb der Streifen.

Vorzugsweise sind die Bänder in ihrer Länge so bemessen und/oder so im Fahrzeugsitz angeordnet, dass sie in der Staustellung mit ihrem einen Ende aus der Rückenlehne oder dem Sitzteil herausstehen. Besondere bevorzugt schiebt sich dieses Ende beim Überführen der Rückenlehne von der Stau- in die Gebrauchsstellung zumindest teilweise in die Rückenlehne oder das Sitzteil hinein. Diese Bewegung bewirkt die Krümmung der Streifen. Beim Überführen der Rückenlehne in die Staustellung, wandern die Bänder wieder aus der Rückenlehne oder dem Sitzteil heraus so dass die Wölbung der Rückenlehne oder des Sitzteils verschwindet. Vorzugsweise stützt sich dieses Ende der Bänder in der Gebrauchsstellung an der Rückenlehne oder dem Sitzteil ab, so dass deren gewölbte Form auch unter Belastung, beispielweise durch einen Sitzinsassen, erhalten bleibt.

Vorzugsweise sind zwischen den Mitteln beispielsweise den Streifen, und den Mitteln, beispielsweise den Bändern, Mittel so angeordnet, dass deren eines Ende jeweils mit einem Mittel, beispielsweise dem Streifen, und deren anderes Ende jeweils mit einem Mittel (8), beispielsweise dem Band verbunden, vorzugsweise vernietet ist. Mit diesen Mitteln wird die Bewegung der Bänder in eine Formänderung der Streifen umgewandelt.

Vorzugsweise sind die Mittel halbelastische Streifen. Diese Streifen können aus Kunststoff, Metall oder Holz oder einer Kombination aus diesen Werkstoffen gefertigt sein, wobei ein Werkstoff, der beim Zerbrechen nicht splittert, bevorzugt ist.

Vorzugsweise biegen sich diese Mittel beim Überführen von Staustellung in die Gebrauchsstellung, wodurch sich Streifen unterhalb des Bezuges nach außen wölben und so die Wölbung der Rückenlehne bzw. des Sitzteils reversibel bewirken.

Im folgenden wird die Erfindung anhand der Figuren 1 - 3 erläutert. Diese Erläuterungen sind lediglich beispielhaft und schränken den allgemeinen Erfindungsgedanken nicht ein. Die Richtungsangaben beziehen sich jeweils auf die in der Gebrauchsstellung befindliche Rückenlehne.
- **Figuren 1 und 2**: zeigen eine Ausführungsform des erfindungsgemäßen Fahrzeugsitzes.
- **Figur 3**: zeigt die Streifen in den Taschen.

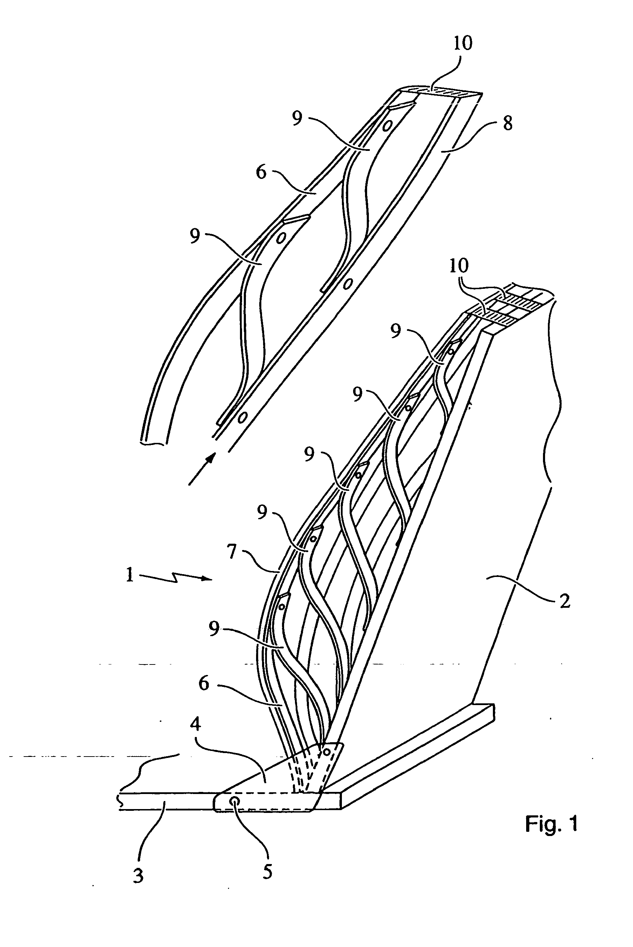

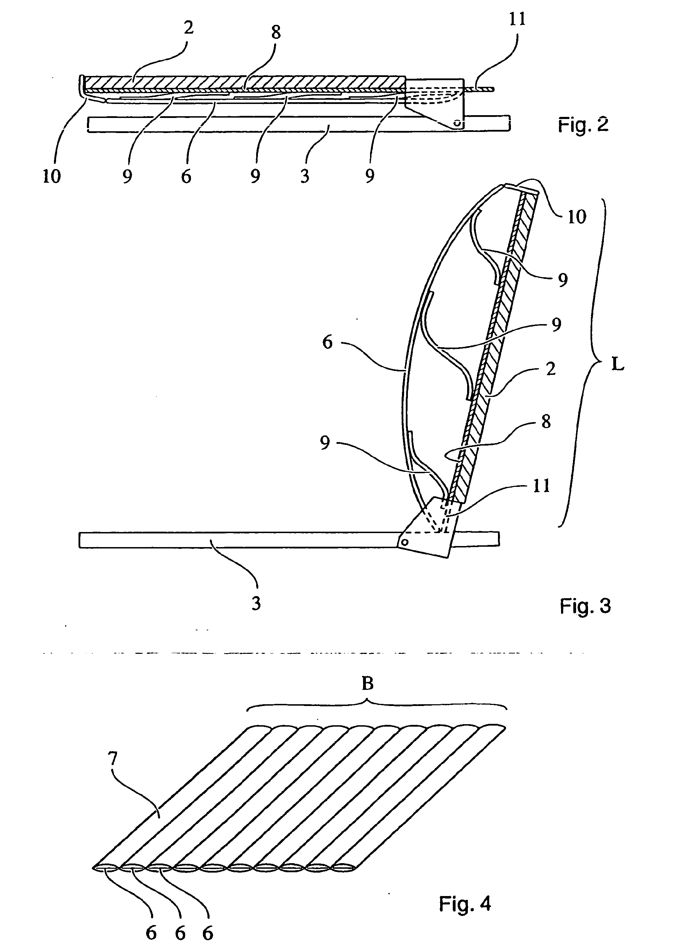

Der in Figur 1 gezeigte Fahrzeugsitz 1 besteht aus einer Rückenlehne 2 und einem Sitzteil 3. Die Rückenlehne 2 ist mittels einer vorspringen Lasche 4 um eine nach vorne versetzte Achse 5 drehbar am Sitzteil 3 befestigt und kann aus ihrer aufrechten Gebrauchsstellung (Figuren 1, 3) in eine waagerechte Staustellung (Figur 2) geklappte werden. Auf der dem Sitzinsassen zugewandten Flächenseite der Rückenlehne 2 ist unterhalb des Sitzbezuges 7 eine Vielzahl von halbsteifen Streifen 6 (z. B. aus Kunststoff, beispielsweise Polypropylen) parallel zueinander und rechtwinklig zur Achse 5 angeordnet. Die Länge der Streifen entspricht im wesentlichen der Länge L der Rückenlehne. Es sind so viele Streifen nebeneinander angeordnet, dass im Wesentlichen die gesamte Breite B der Rückenlehne Streifen 6 aufweist. Die Streifen 6 können eine unterschiedliche Breite haben, weisen aber vorzugsweise dieselbe Breite auf. In die Rückenlehne 2 sind, im Wesentlichen deckungsgleich zu den Streifen 6, steife und nach unten aus der Rückenlehne 2 herausragende Stahlbänder 8 entlang ihrer Längserstreckung verschieblich eingelassen, welche über eine Anzahl von Streifenstücke 9 aus einem halbsteifen Werkstoff mit den jeweils zugeordneten Streifen 6 verbunden sind. Die Streifenstücke 9 verlaufen, zueinander in Längserstreckung des betreffenden Stahlbands 8 beabstandet, zwischen den Streifen 6 und den Stahlbändern 8 und sind mit ihrem in Richtung der Achse 5 weisenden Ende am Stahlband 8 und mit ihrem entgegen gesetzten Ende am Streifen 6 befestigt, insbesondere vernietet. Das der Achse 5 zugewandte Ende jedes Streifens 6 ist fest mit dem unteren Bereich der Rückenlehne 2 verbunden, während die entgegengesetzten Enden der Streifen 6 über ein Textilband 10 in Verbindung mit dem oberen Ende der Rückenlehne 2 steht.

In Staustellung der Rückenlehne 2 (Figur 2) schieben sich die Stahlbänder 8 aus dem unteren Ende der Rückenlehne 2 heraus, wodurch die zueinander gehörenden Streifen 6, Streifenstücke 9 und Stahlbänder 8 flach aufeinander gelegt werden können. Beim Aufrichten der Rückenlehne 2 (Fig, 3) stoßen die auskragenden Enden 11 der Stahlbänder auf das Sitzteil 3 auf, wodurch die Stahlbänder 8 relativ Rückenlehne 2 und Streifen 6 nach oben verschoben werden. Die Streifenstücke 9 werden dabei S-förmig gespreizt, wobei sich die Streifen 6 elastisch federnd von der Rückenlehne 2 nach vorne wegwölben. Die Kontur der Wölbung wird durch die Länge des Endes 11 und der Streifenstücke 9 bestimmt und kann über die Breite der Rückenlehne 2 verschieden, ggf. auch einstellbar, vorgegeben werden. Figur 4 zeigt eine Vielzahl nebeneinander angeordneter, taschenartig in den Sitzbezug 7 eingefügter Streifen 6.

Grundsätzlich lässt sich die Erfindung auch zu einer aufhebbaren Wölbung des Sitzteils 3 einsetzen.

### Bezugszeichenliste

- 1: Fahrzeugsitz
- 2: Rückenlehne
- 3: Sitzteil
- 4: Lasche
- 5: Achse
- 6: Streifen
- 7: Sitzbezug
- 8: Stahlband
- 9: Streifenstücke
- 10: Textilband
- 11: Ende (des Stahlbands 8)
- L: Länge der Rückenlehne oder des Sitzteils
- B: Breite der Rückenlehne oder des Sitzteils

## Patentansprüche

1. Fahrzeugsitz (1) mit einer Rückenlehne (2) und einem Sitzteil (3), wobei die Rückenlehne (2) von einer Gebrauchsstellung in eine Staustellung überführbar ist und sich dabei die Form der Rückeniehne (2) und/oder des Sitzteils (3) andert, wobei das Sitzteil (3) und/oder die Rückenlehne (2) eine Vielzahl von parallel nebeneinander angeordneten, sich im Wesentlichen über die gesamte Länge des Sitzteils (3) oder der Rückenlehne (2) erstreckenden Mitteln (6) aufweist, deren Form sich beim Überführen der Rückenlehne von der Gebrauchs- in die Staustellung reversibel verändert, **dadurch gekennzeichnet, dass** die Mittel (6) halbsteife Streifen sind.

2. Fahrzeugsitz (1) nach Anspruch 1, **dadurch gekennzeichnet, dass** er eine Achse (5) aufweist, um die die Rückenlehne (2) drehbar angeordnet ist und zu der die Mittel (6) senkrecht angeordnet sind.

3. Fahrzeugsitz (1) nach Anspruch 1 oder 2, **dadurch gekennzeichnet, dass** er einen Bezug (7) aufweist und dass die halbsteifen Streifen (6) vorzugsweise jeweils in einer Tasche (7') des Sitzbezuges angeordnet sind.

4. Fahrzeugsitz nach einem der voranstehenden Ansprüche, **dadurch gekennzeichnet, dass** die Streifen (6) mit ihrem in Richtung der Achse (5) weisenden Ende fest mit dem Fahrzeugsitz (7) verbunden sind.

5. Fahrzeugsitz nach einem der voranstehenden Ansprüche, **dadurch gekennzeichnet, dass** die Streifen mit ihrem von der Achse (5) wegweisenden Ende beweglich mit dem Fahrzeugsitz verbunden sind.

6. Fahrzeugsitz (1) nach einem der voranstehenden Ansprüche, **dadurch gekennzeichnet, dass** er Mittel (8), vorzugsweise Bänder, besonders bevorzugt Stahlbänder aufweist, die verschieblich an der Rückenlehne angeordnet, vorzugsweise in diese eingelassen, sind.

7. Fahrzeugsitz nach Anspruch 6, **dadurch gekennzeichnet**, das die Bänder (8) im Wesentlichen deckungsgleich zu den Streifen (6) angeordnet sind.

8. Fahrzeugsitz nach einem der voranstehenden Ansprüche, **dadurch gekennzeichnet, dass** sich die Mittel (8) beim Überführen der Rückenlehne von der Gebrauchs- in die Staustellung und umgekehrt verschieben.

9. Fahrzeugsitz nach einem der voranstehenden Ansprüche, **dadurch gekennzeichnet, dass** die Mittel (8) in der Staustellung mit ihrem Ende (11) aus der Rückenlehne (2) oder dem Sitzteil (3) herausstehen.

10. Fahrzeugsitz nach Anspruch 9, **dadurch gekennzeichnet, dass** sich das Ende (11) beim Überführen der Rückenlehne (2) von der Stau- in die Gebrauchsstellung zumindest teilweise in die Rückenlehne oder das Sitzteil hineinschiebt.

11. Fahrzeugsitz nach einem der Ansprüche 9 oder 10, **dadurch gekennzeichnet, dass** sich das Ende (11) in der Gebrauchsstellung an der Rückenlehne oder dem Sitzteil abstützt.

12. Fahrzeugsitz nach einem der voranstehenden Ansprüche, **dadurch gekennzeichnet, dass** zwischen den Mitteln (6) und den Mitteln (8) Mittel (9) angeordnet sind, wobei jeweils das eine Ende der Mittel (9) jeweils mit einem Mittel (6) und jeweils das andere Ende der Mittel (9) jeweils mit einem Mittel (8) verbunden, vorzugsweise vernietet ist.

13. Fahrzeugsitz nach Anspruch 12, **dadurch gekennzeichnet, dass** die Mittel (9) halbelastische Streifen sind.

14. Fahrzeugsitz nach Anspruch 12 oder 13, **dadurch gekennzeichnet, dass** sich die Mittel (9) beim Überführen von Staustellung in die Gebrauchsstellung biegen.

## Claims

1. Vehicle seat (1) with a backrest (2) and a seat part (3), wherein the backrest (2) can be transferred from a use position into a storage position and, in the process, the shape of the backrest (2) and/or of the seat part (3) changes, the seat part (3) and/or the backrest (2) having a multiplicity of means (6) which are arranged parallel next to one another, extend substantially over the entire length of the seat part (3) or of the backrest (2) and the shape of which changes reversibly when the backrest is transferred from the use position into the storage position, **characterized in that** the means (6) are semi-rigid strips.

2. Vehicle seat (1) according to Claim 1, **characterized in that** it has an axis (5) about which the backrest (2) is rotatably arranged and with respect to which the means (6) are arranged perpendicularly.

3. Vehicle seat (1) according to Claim 1 or 2, **characterized in that** it has a cover (7), and **in that** the semi-rigid strips (6) are preferably each arranged in a pocket (7') of the seat cover.

4. vehicle seat according to one of the proceeding claims, **characterized in that** the strips (6) are connected fixedly to the vehicle seat (7) at their end pointing in the direction of the axis (5).

5. Vehicle seat according to one of the preceding claims, **characterized in that** the strips are connected movably to the vehicle seat at their end pointing away from the axis (5).

6. Vehicle seat (1) according to one of the preceding claims, **characterized in that** it has means (8), preferably bands, particularly preferably steel bands, which are arranged displaceably on the backrest and are preferably embedded therein.

7. Vehicle seat according to Claim 6, **characterized in that** the bands (8) are arranged substantially congruently to the strips (6).

8. Vehicle seat according to one of the preceding claims, **characterized in that** the means (8) are displaced when the backrest is transferred from the use position into the storage position and vice versa.

9. Vehicle seat according to one of the preceding claims, **characterized in that**, in the storage position, the means (8) protrude at their end (11) out of the backrest (2) or the seat part (3).

10. Vehicle seat according to claim 9, **characterized in that**, when the backrest (2) is transferred from the storage position into the use position, the end (11) is at least partially pushed into the backrest or the seat part.

11. Vehicle seat according to either of Claims 9 and 10, **characterized in that**, in the use position, the end (11) is supported on the backrest or the seat part.

12. Vehicle seat according to one of the preceding claims, **characterized in that** means (9) are arranged between the means (6) and the means (8), with in each case one end of the means (9) being connected, preferably riveted, in each case to a means (6) and in each case the other end of the means (9) being connected, preferable riveted, in each case to a means (8).

13. Vehicle seat according to Claim 12, **characterized in that** the means (9) are semi-elastic strips.

14. Vehicle seat according to Claim 12 or 13, **characterized in that** the means (9) bend upon transfer from the storage position into the use position.

## Revendications

1. Siège de véhicule (1), comprenant un dossier (2) et une partie d'assise (3), le dossier (2) pouvant être transféré d'une position d'utilisation à une position de rangement, et la forme du dossier (2) et/ou de la partie d'assise (3) changeant en l'occurrence, la partie d'assise (3) et/ou le dossier (2) comprenant une pluralité de moyens (6) juxtaposés parallèlement qui s'étendent essentiellement sur toute la longueur de la partie d'assise (3) ou du dossier (2), et dont la forme change de manière réversible lors du transfert du dossier de la position d'utilisation à la position de rangement, **caractérisé en ce que** les moyens (6) sont des rubans semi-rigides.

2. Siège de véhicule (1) selon la revendication 1, **caractérisé en ce qu'**il possède un axe (5) autour duquel le dossier (2) est disposé de manière pivotante et perpendiculairement auquel les moyens (6) sont disposés.

3. Siège de véhicule (1) selon la revendication 1 ou 2, **caractérisé en ce qu'**il possède un revêtement (7), et **en ce que** les rubans (6) semi-rigides sont disposés de préférence dans une poche respective (7') du revêtement de siège.

4. Siège de véhicule selon l'une quelconque des revendications précédentes, **caractérisé en ce que** les rubans (6) sont reliés de manière fixe au siège de véhicule (7) par l'intermédiaire de leurs extrémités orientées en direction de l'axe (5).

5. Siège de véhicule selon l'une quelconque des revendications précédentes, **caractérisé en ce que** les rubans sont reliés de manière mobile au siège de véhicule par l'intermédiaire de leurs extrémités opposées à l'axe (5).

6. Siège de véhicule (1) selon l'une quelconque des revendications précédentes, **caractérisé en ce qu'**il possède des moyens (8), de préférence des bandes, de manière particulièrement préférée des bandes d'acier, qui sont disposées de manière déplaçable sur le dossier, de préférence incorporées dans ce dernier.

7. Siège de véhicule selon la revendication 6, **caractérisé en ce que** les bandes (8) sont disposées essentiellement en coïncidence avec les rubans (6).

8. Siège de véhicule selon l'une quelconque des revendications précédentes, **caractérisé en ce que** les moyens (8) se déplacent lors du transfert du dossier de la position d'utilisation à la position de rangement et inversement.

9. Siège de véhicule selon l'une quelconque des revendications précédentes, **caractérisé en ce que** les moyens (8) dépassent du dossier (2) ou de la partie d'assise (3) par l'intermédiaire de leurs extrémités (11) dans la position de rangement.

10. Siège de véhicule selon la revendication 9, **caractérisé en ce que** les extrémités (11) s'insèrent au moins partiellement dans le dossier ou la partie d'assise lors du transfert du dossier (2) de la position de rangement à la position d'utilisation.

11. Siège de véhicule selon la revendication 9 ou 10, **caractérisé en ce que** les extrémités (11) s'appuient contre le dossier ou la partie d'assise dans la position d'utilisation.

12. Siège de véhicule selon l'une quelconque des revendications précédentes, **caractérisé en ce que** des moyens (9) sont disposés entre les moyens (6) et les moyens (8), une extrémité respective des moyens (9) étant reliée, de préférence rivetée, à un moyen (6) et l'autre extrémité respective des moyens (9) étant reliée, de préférence rivetée, à un moyen (8).

13. Siège de véhicule selon la revendication 12, **caractérisé en ce que** les moyens (9) sont des rubans semi-élastiques.

14. Siège de véhicule selon la revendication 12 ou 13, **caractérisé en ce que** les moyens (9) se courbent lors du transfert de la position de rangement à la position d'utilisation.
